# EUROPÄISCHE PATENTANMELDUNG

(11) **EP 0 586 913 A2**
(43) Veröffentlichungstag der Anmeldung: **16.03.1994**
(21) Anmeldenummer: 93112872.2
(22) Anmeldetag: 11.08.1993
(51) Int. Cl.: B05B 7/04, B05B 1/34, F01N 3/08, F01N 3/20, F23D 11/10

(54) **Zerstäubereinrichtung**

(30) Priorität: 08.09.1992 DE 4230056
(71) Anmelder: MAN Nutzfahrzeuge Aktiengesellschaft, 80976 München (DE)
(72) Erfinder: Kreutmair, Josef, Dipl.-Ing. (FH), D-85276 Pfaffenhofen (DE); Jacob, Eberhard, Dr. Dipl.-Chem., D-82327 Tutzing (DE)

(57) **Zusammenfassung**

Um eine ausreichende Vernebelung eines zu zerstäubenden Mediums (16) zu erreichen, wird eine Zerstäubereinrichtung (10) vorgeschlagen, die aus einer Mischeinrichtung (11), in die das Medium und Druckgas (17) eingeführt und vorvermischt werden, und einer Mischleitung (12) besteht, die die Mischeinrichtung (11) mit einer Zerstäuberdüse (13) verbindet, und in der eine weitere Vermischung des Mediums mit Druckgas erfolgt.

## Beschreibung

Die Erfindung bezieht sich auf ein Verfahren und eine Vorrichtung zum Zerstäuben eines Mediums mittels Druckgas unter Anwendung einer Zerstäuberdüse.

Das Zerstäuben von flüssigen Medien findet in weiten technischen Gebieten Anwendung. In der Regel wird das Druckgas unmittelbar vor der Zerstäuberdüse dem Medium zugeführt und in einem Mischraum der Zerstäuberdüse vermischt, DE 419 233.

Gemäß DE 35 32 778 C2 ist eine Brennstoff-Zerstäubereinrichtung bekannt, bei der der Brennstoff und das Gas über eine Leitung bereits als Gemisch zur Zerstäuberdüse gelangt.

Bei den bekannten Systemen mag die erreichte Zerstäubung für den jeweiligen Anwendungsfall ausreichend sein. Es gibt jedoch Anwendungen, wie z. B. die Einführung eines Reaktanden in eine gasförmige, insbesondere strömende Atmosphäre, bei der für eine rasche und vollständige Reaktion ein hoher Vernebelungsgrad des einzuführenden Mediums erforderlich ist.

Der Erfindung liegt die Aufgabe zugrunde, ein Verfahren der eingangs genannten Art zu schaffen, mit dem eine hochgradige Zerstäubung von flüssigen Medien möglich ist.

Die Aufgabe wird erfindungsgemäß mit den Maßnahmen des Anspruchs 1 gelöst.

Es hat sich gezeigt, daß eine optimale und dauerhafte sowie zuverlässige Zerstäubung erreicht wird, wenn das Medium mit dem Druckgas bereits innig vermischt die Zerstäuberdüse erreicht. Dieses wird dadurch erreicht, daß die beiden Medien vorvermischt und in der Leitung weitergemischt werden. Hierdurch wird eine zuverlässige Zerstäubung mit engem Tropfenspektrum erreicht, die sogar eine Zerstäubung in heiße Abgase dauerhaft, z. B. ohne Belagbildung, möglich macht.

Eine erfolgreiche Vermischung (Aerosolbildung) wird dadurch erzielt, daß das Druckgas tangential auf den Mediumstrom auftrifft und somit beide Medien in eine verwirbelnde Bewegung gebracht werden, die sich möglichst weitgehend in der Leitung bis zur Zerstäuberdüse fortsetzen soll.

Um die Zerstäubungseinrichtung in den Betriebspausen frei von Verunreinigungen zu halten, die von der Umgebung eingebracht werden könnten, sowie vom Zerstäubungsmedium, insbesondere, wenn dieses aggressiv ist, fest werden kann oder hohen Gefrierungspunkt hat, wird vorgeschlagen, die Druckgasförderung nach Beendigung des Zerstäubungsvorganges fortzusetzen. Dieses kann dadurch geschehen, daß die Druckgasmenge in den Betriebspausen der Zerstäubereinrichtung auf eine verminderte Menge reduziert wird, die gerade ausreicht, um das Zerstäubersystem von Restmedium zu befreien und/oder das System zu kühlen.

Gemäß einer bevorzugten Ausgestaltung wird ein Druckspeicher für Spülgas vorgesehen, der bei Inbetriebnahme gefüllt und bei Beendigung des Zerstäubungsvorganges sich automatisch über eine Drossel in das Zerstäubungssystem entleert. Damit wird gewährleistet, daß bei Ausfall der Stromversorgung oder bei anderen Störungen das System durchgeblasen wird.

Die Erfindung erstreckt sich auf eine Zerstäubereinrichtung zum Durchführen des vorstehenden Verfahrens, das durch die Merkmale des Anspruchs 5 gekennzeichnet ist.

Die Mischeinrichtung kann jede Ausgestaltung annehmen, mit der eine rasche und gute Vermischung der beiden Medien möglich ist. Eine fertigungstechnisch einfache Ausführung besteht in einer Mischeinrichtung, in der die Einmündung des Druckgases tangential zur Strömungsführung des Mediums erfolgt. Dadurch entsteht in einem Mischraum der Mischeinrichtung eine Verwirbelung beider Medien, die sich in der Mischleitung fortsetzt, so daß in der Mischleitung die Vermischung vervollständigt werden kann. Der Mischer und die Mischleitung sorgen auch dafür, daß z. B. Ungleichförmigkeiten in der Flüssigkeitsführung (z. B. durch Membranpumpe) möglichst vergleichmäßigt werden.

Die Mischleitung ist gemäß einer weiteren Ausgestaltung der Erfindung so ausgelegt, daß darin eine turbulente Strömung des Medium-Druckgas-Gemisches möglich ist. Der Durchmesser ist so gewählt, daß auch bei senkrechter Verlegung ein vollständiges Leerblasen der Mischleitung von Flüssigkeit gewährleistet wird.

Die Zerstäuberdüse ist vorzugsweise mit einer Zwischendüse ausgestattet, die den Düsenraum in zwei Räume unterteilt. Hierdurch kann das Aerosol innerhalb der Düse beschleunigt werden, derart, daß das Fluid gegen die die Düsenlöcher enthaltende Düsenwand mit derartigem Impuls auftrifft, daß das Fluid gleichmäßig in alle Richtungen aufgeteilt wird. Damit läßt sich bei Düsen mit mehreren Austrittslöchern sicherstellen, daß auch bei sehr geringer Flüssigkeits-Dosierung der Flüssigkeitsstrahl auf alle Düsenlöcher gleichmäßig verteilt wird. Vor der Zwischendüse ist zweckmäßigerweise ein Sieb vorgesehen.

Die Austrittslöcher der Zerstäuberdüse sind vorzugsweise nicht in einer Ebene, sondern in einem Winkel zueinander angeordnet, derart, daß ein Zerstäubungskegel austritt. Das hat insbesondere bei der Eindüsung von Medien in ein strömendes Gas den Vorteil, daß eine bessere Aufteilung und Vermischung und damit schnellere und vollständige Reaktionsmöglichkeit erreicht wird.

Die erfindungsgemäße Zerstäubereinrichtung eignet sich optimal zum Einsprühen eines Reduktions- oder Oxidationsmittel in einen Abgasstrom zum Zwecke der Reinigung der Abgase von Schadstoffen.

Bei der Anwendung der Zerstäubereinrichtung zum Einsprühen einer wässrigen Harnstofflösung zur Reduktion von NOₓ werden die mit dem Harnstoff in Berührung kommenden Oberflächenbereiche der Zerstäubereinrichtung mit einer katalytischen Schicht überzogen, um eine Ablagerung von Harnstoffkristallen bzw. Abgasrückständen zu vermeiden. Die katalytische Schicht (Schichtdicke ca. 30 - 70 µm) besteht aus einer Mischung aus sulfatisiertem TiO₂ (Anastas, 70 m²/g, 1% SO₄²⁻), SiO₂ (Aerosol, 150 m²/g) und Al₂O₃ (120 m²/g) im Gewichtsverhältnis 6:1:2.

Zur Vermeidung von Ablagerungen auf der Düse aus dem Abgas (z. B. Kohlenwasserstoffe) wird die Mischoxidschicht platiniert (1% Platin).

Dies kann durch Tränken der Mischoxidbeschichtung mit Pt(NH₃)₄(NO₃) und anschließendem Trocknen in H₂-Atmosphäre bei 400°C erfolgen.

Bei nicht ausreichender Temperatur für die Hydrolyse des Harnstoffes auf der katalytischen Schicht der Düse kann diese beheizbar ausgestaltet werden.

Für eine genaue und schnelle Echtzeitdosierung zum NOₓ-Anfall, beispielsweise auch in sehr geringen Mengen eines zu zerstäubenden Mediums, wird eine intermittierende Dosierung vorgeschlagen. Dazu eignet sich insbesondere eine federbelastete Membran-Dosierpumpe oder ein pulsweites, moduliertes Magnetventil. Die Dosierpumpe ist vorzugsweise so ausgelegt, daß der Saughub magnetisch aktiviert wird. Eine mechanische Druckfeder drückt bei Deaktivierung des Magneten die Membran in Schließstellung der Pumpe, so daß das Restmedium aus der Pumpe herausgedrückt wird und damit z. B. ein Gefrieren, Verkrusten des Mediums in Betriebspausen zu keiner Zerstörung bzw. Betriebsstörung führt.

Der Druckgasstrom wird vorzugsweise auf einen konstanten Druck im Mischereinlauf geregelt.

Mit Hilfe der Bohrungsdurchmesser in der Zerstäuberdüse und des Druckgasdruckes kann das Tropfenspektrum, das in den Abgasstrom eintritt, so gesteuert werden, daß die Tropfenlebensdauer für die kleinsten Tropfen (unterer Grenztropfen-Durchmesser) so hoch ist, daß beispielsweise an einem Hydrolysekatalysator Harnstoff-Wasserlösung und kein trockener Harnstoff auftrifft. Der Vorteil dieses Zerstäubungssystems liegt darin, daß ein relativ enges Tropfenspektrum erzielbar ist, so daß der Unterschied zwischen oberem Grenztropfen-Durchmesser und unterem Grenztropfen-Durchmesser in einem weiten Regelbereich gering ist.

Auf diese Weise können Cold Spots durch örtliche Auskühlung von zu großen Tropfen und Harnstoffschlupf durch "Eintrocknen von zu kleinen Tropfen" vermieden werden. In der Zeichnung sind Ausführungsbeispiele gemäß der Erfindung schematisch dargestellt. Es zeigen:
- Fig. 1: eine Zerstäubereinrichtung und

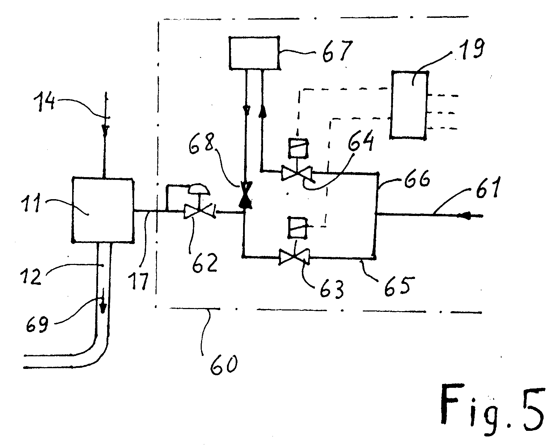

- Fig. 2 bis 4: Ausführungsbeispiele der Einzelkomponenten der Zerstäubereinrichtung.
- Fig. 5: ein weiteres Ausführungsbeispiel.

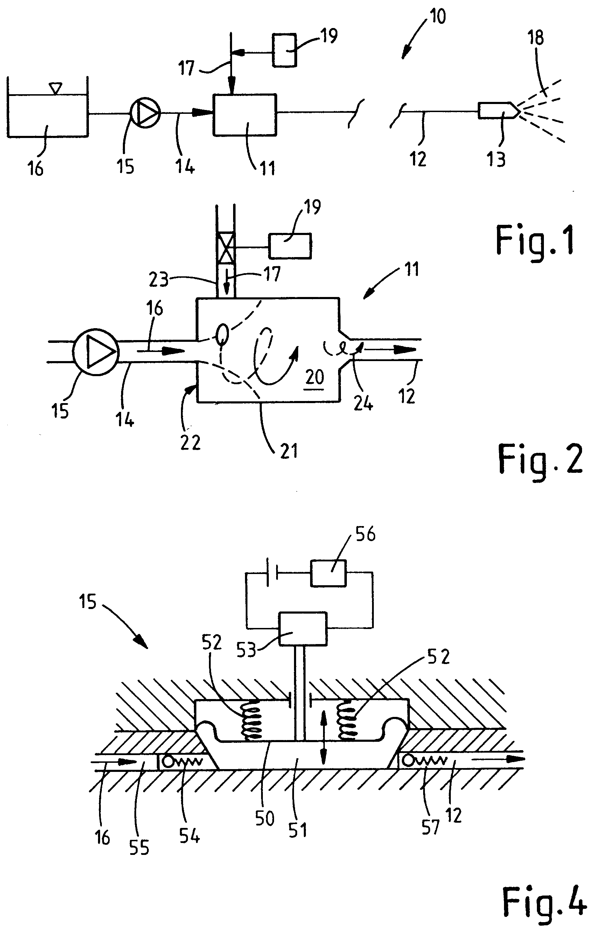

In Fig. 1 ist eine Zerstäubereinrichtung 10 gezeigt, die aus einer Mischeinrichtung 11, einer Mischleitung 12 und einer Zerstäuberdüse 13 besteht.

In die Mischeinrichtung 11 mündet eine Zufuhrleitung 14, über die mittels einer Dosierpumpe 15 oder eines pulsweiten modulierten Magnetventils ein zu zerstäubendes Medium 16 in den Mischraum 20 der Mischeinrichtung 11 gefördert wird. In die Mischeinrichtung 11 gelangt ferner durch nicht dargestellte Einrichtungen erzeugtes Druckgas 17, das durch entsprechende Ausgestaltung der Mischeinrichtung 11 im Mischraum 20 sich mit dem einströmenden Medium 16 vermischt. Diese Mischung gelangt über die Mischleitung 12, die so ausgelegt ist, daß die Mischung darin eine möglichst turbulente Strömung erfährt, in die Zerstäuberdüse 13. Durch diese Mischbewegungen in der Mischeinrichtung 11 und der Mischleitung 12 wird das Medium 16 in sehr kleine Tröpfchen aufgeteilt, die dann als sehr feiner Nebel 18 aus der Zerstäuberdüse 13 heraustritt und durch Expansion des Druckgases feinst verteilt wird.

Die Mischeinrichtung 11 kann unterschiedlich ausgestaltet sein, wichtig ist dabei, daß durch Strömungsleiteinsätze und/oder entsprechende Gasführungen eine innige Vermischung zwischen dem Medium 16 und dem Druckgas 17 sowie ein gleichmäßiger Flüssigkeitsaustrag in die Mischleitung erfolgt. Letzteres ist besonders bei ungleichförmiger Flüssigkeitseinbringung wichtig, z. B. durch intermittierend arbeitende Pumpen.

Eine fertigungstechnisch einfache Ausführung ist in Fig. 2 gezeigt, die in einem zylindrischen Mischraumbehälter 21 besteht, in dessen eine Stirnseite 22 das Medium 16 einströmt und in der Nähe dieser Stirnseite 22 die Druckgasleitung 23 tangential einmündet. Das Medium 16 wird auf diese Weise mit dem Druckgas 17 innerhalb des Mischraumes 20 in eine schraubenlinienförmige Bewegung versetzt, was sich als sehr günstig für eine starke Vermischung und Vergleichmäßigung herausgestellt hat. Diese annähernd helikoidale Strömung 24 setzt sich in der Mischleitung 12 fort, worin die Zertrennung von größeren Tröpfchen in noch kleinere fortgesetzt werden kann (Aerosolbildung).

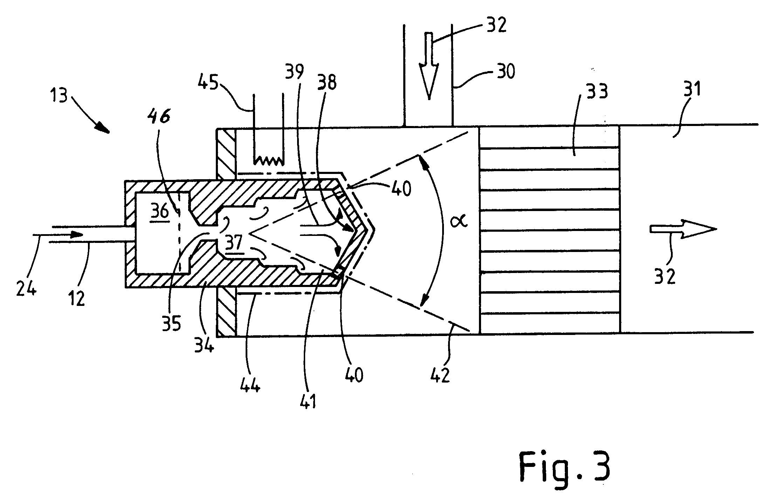

In Fig. 3 ist ein Ausführungsbeispiel einer Zerstäuberdüse 13 gezeigt, die in einem Abgasrohr 30, 31 angeordnet ist. Sie dient beispielsweise zum Zumischen eines Oxdations- oder Reduktionsmittels in die Abgase 32 vor deren Eintritt in einen Katalysator 33.

Die Zerstäuberdüse 13 besteht aus einem Düsenkörper 34, der mit einer Zwischendüse 35 ausgestattet ist, die den Düsen- bzw. Mischraum in einen Vorraum 36 und einen Hauptraum 37 aufteilt. Das Reaktionsmittel-Gas-Gemisch gelangt über die Mischleitung 12 in den Vorraum 36, in der sich ein Sieb 46 befindet, und wird, beschleunigt durch die Zwischendüse 35, gegen die gegenüberliegende Wand 38 des Hauptraumes 37 geschleudert, wo das Gemisch, wie die Pfeile 39 zeigen, auseinander in Richtung der Düsenöffnungen 40 gedrückt wird. Auf diese Weise kann auch eine sehr geringe Menge des Mediums 16 erfolgreich zerstäubt werden, weil die Strömungskraft die Gravitationskraft überwindet, das heißt, es wird verhindert, daß das Medium nur aus den unteren Düsenöffnungen heraustritt und außerden wird vermieden, daß zu zerstäubendes Medium sich im unteren Bereich 41 des Düsenraumes 37 ablagern kann.

Der Hauptdüsenraum 37 kann zur Bildung von Abreißkanten von der Zwischendüse 35 aus, sich stufenweise erweiternd, ausgebildet werden.

Um eine gute Vermischung mit einem weiteren Medium, z. B. mit den Abgasen 32 oder eine ausreichende Aufteilung des Sprühnebels 18 auf eine Fläche, z. B. den Eintrittsquerschnitt des Katalysators 33 zu erreichen, ist die Austrittsstirnseite der Zerstäuberdüse 13 konisch geformt, so daß die Achsen 42, 43 von gegenüberliegenden Düsenöffnungen 40 einen Winkel α bilden. Der Sprühnebel 18 bildet auf diese Weise einen definierten Konus, dessen Winkel α sich nach der Geometrie der umgebenden Bauelemente richtet.

Bei der Verwendung der Zerstäuberdüse 13 zum Zerstäuben von Medien, die sich unter bestimmten Bedingungen auf die Düse ablagern können, wird die Oberfläche der Zerstäuberdüse 13, soweit sie dem Medium ausgesetzt ist, mit einer katalytischen Schicht 44 überzogen, mit der Ablagerungen vermieden werden können. Zur Aktivierung der katalytischen Wirkung auch bei niedrigen Außentemperaturen kann eine Beheizung 45 der katalytischen Schicht 44 vorgesehen werden. Dazu könnten beispielsweise eine oder mehrere Glühkerzen oder eine Hochfrequenzheizung Verwendung finden.

Als Dosier- oder Beförderungspumpe 15 eignet sich jede bekannte Ausführung, soweit sie beständig gegen das zu zerstäubende Medium 16 ist. Für die Beförderung von größeren, aber auch sehr geringen Flüssigkeitsmengen wird eine Dosierpumpe 15 bevorzugt, die in Ruhestellung den geringsten Pumpenraum einnimmt, das heißt, daß bei Stillsetzung der Pumpe 15 immer der Förderhub vollzogen wird. Dazu eignet sich insbesondere eine Magnet-Membranpumpe, deren Hubraum 51 mit der Membran 50 so reduziert werden kann, daß ein möglichst geringer Restraum verbleibt. Die Membran 50 wird mittels Druckfedern 52 in Förderrichtung gedrückt, während der Saughub mittels Magneten 53 aktivierbar ist. Über die mit einem Rückschlagventil 54 versehene Saugleitung 55 wird eine entsprechend dosierte Menge des Mediums 16 in den Pumpenraum 51 eingesaugt, wenn das Magnet 53 über einen Regler 56 entsprechend aktiviert wird. Bei Deaktivierung der Magnete 53 wirken die Druckfedern 52 in Richtung Förderhub, wodurch das Medium über die ebenfalls ein Rückschlagventil 57 enthaltende Mischleitung 12 gedrückt wird.

Eine weitere Dosiermöglichkeit, insbesondere für Echtheitdosierungen, besteht darin, daß der Flüssigkeitsstrom mittels eines pulsweiten modulierten Ventils zudosiert wird. Zur Dosierung der Flüssigkeit kann auch eine Schlauchpumpe verwendet werden.

Zum Schutz vor Einfrieren aller mit den Flüssigkeitsmedien in Berührung kommenden Bauteile ist die Druckgaszufuhr so ausgestaltet, daß ein Druckgasstrom nach Beendigung des Zerstäubungsvorganges über eine Zeitspanne aufrechterhalten wird, um die Restbestände des Mediums aus der Zerstäubereinrichtung 10 hinauszublasen. Mit einem Regler 19 kann dieser Vorgang gesteuert werden, oder es wird ein Speichervolumen über eine Drossel entleert. Dieses Druckgas kann auch in einem hilfsenergiefreien Behälter gespeichert und über eine Drossel bereitgestellt werden.

In Fig. 5 ist ein Ausführungsbeispiel hierzu dargestellt. Die Zeichnung zeigt die Mischeinrichtung 14, die Flüssigkeits- und Druckgaszufuhr 14 bzw. 17 und die Mischleitung 12 für das Aerosol 69.

In Strömungsrichtung weist die Druckgasleitung 61 zwei parallelgeschaltete Ventile, nämlich ein Zerstäubungsventil 63 und ein Spülluftventil 64 in zugeordneten Zweigleitungen 65 bzw. 66 und einen Konstantdruckregler 62 auf. Das Druckgasleitungssystem 61, 63, 65 ist so ausgelegt, daß vor dem Druckregler 62 ein erhöhter Druck herrscht. Dieser Druck wird ebenfalls zur Befüllung eines Druckspeichers 67 genutzt, der zur energiefreien Spülung des Zerstäubersystems 11, 12, 13 dient.

Der Druckspeicher 67 ist strömungstechnisch mit der einen das Spülluftventil 64 enthaltenden Zweigleitung 66 verbunden, und zwar in Strömungsrichtung nach dem Spülluftventil 64.

Die Wirkungsweise kann beispielsweise gut bei einer Zerstäubereinrichtung zur Einspritzung eines Reaktionsmittels in die Abgase eines Verbrennungsmotors, z. B. eines Fahrzeugs, beschrieben werden. Bei Inbetriebnahme des Motors wird das Spülluftventil 64 grundsätzlich über den Regler 19 geöffnet. Damit wird im nachgeschalteten Druckspeicher 67 der in der Druckgasleitung 61 herrschende Druck, z. B. 3 bar, aufgebaut.

Die Druckluftzufuhr für die Zerstäubung des Reaktonsmittels wird über das Zerstäubungsgasventil 63 gesteuert, wobei der Konstantdruckregler 62 für die Aufrechterhaltung des eingestellten Gasdruckes sorgt.

Beim Ausschalten des Verbrennungsmotors wird die Reaktionsmediumzufuhr durch Schließen des Zerstäubungsgasventils 63 beendet. Automatisch tritt die Spülung ein, indem das im Druckspeicher 67 gespeicherte Gas von einer Drossel 68 dosiert, automatisch in das Zerstäubungssystem 11, 12, 13 einströmt und Restbestandteile des Reaktionsmediums hinausbläst.

Die automatische und fehlerfreie Ausblasung erfolgt auch z. B. bei Stromausfall, wobei die Reaktionsmedium- und Druckgaszufuhr unterbrochen wird und das gespeicherte Gas über das Zerstäubungssystem automatisch entweichen wird. Damit werden Schäden durch Gefrieren, Verkrustung etc. des Mediums zuverlässig verhindert.

## Patentansprüche

1. Verfahren zum Zerstäuben eines Mediums mittels Druckgas unter Anwendung einer Zerstäuberdüse, dadurch gekennzeichnet, daß das Medium (16) mit dem Druckgas (17) vorgemischt und über eine Mischleitung (12) in die Zerstäuberdüse (13) geleitet wird.

2. Verfahren nach Anspruch 1, dadurch gekennzeichnet, daß das Druckgas (17) tangential auf den Mediumstrom gerichtet wird.

3. Verfahren nach Anspruch 1 oder 2, dadurch gekennzeichnet, daß das Druckgas nach Beendigung des Zerstäubungsvorganges zur Spülung der das Medium führenden Teile der Zerstäubereinrichtung (10) für eine Zeitspanne fortgesetzt wird.

4. Verfahren nach einem der Ansprüche 1 bis 3, dadurch gekennzeichnet, daß das Druckgas in den Medien-Dosierpausen auf eine verminderte Spül- und Kühlgasmenge reduziert wird.

5. Zerstäubereinrichtung zur Durchführung des Verfahrens nach Anspruch 1, bestehend aus einer Leitung mit einer Zerstäuberdüse, dadurch gekennzeichnet, daß eine Mischeinrichtung (11) vorgesehen ist, in die das Medium (16) und das Druckgas (17) zur innigen Vermischung und Vergleichmäßigung des Mediumstroms einleitbar sind, und daß die Mischeinrichtung über eine als Mischleitung (12) ausgebildete Leitung mit der Zerstäuberdüse (13) verbunden ist.

6. Einrichtung nach Anspruch 5, dadurch gekennzeichnet, daß die Mischeinrichtung (11) so ausgestaltet ist, daß das Druckgas (17) tangential auf den Mediumstrom auftrifft.

7. Einrichtung nach Anspruch 5 oder 6, dadurch gekennzeichnet, daß die Mischkammer (20) der Mischeinrichtung (11) Einbauten aufweist, mit denen ein intermittierender Mediumszulauf am Austritt zur Mischleitung (12) vergleichmäßigbar ist.

8. Einrichtung nach einem der Ansprüche 5 bis 7, dadurch gekennzeichnet, daß ein Druckspeicher (62) für Druckgas vorgesehen ist, der so ausgelegt ist, daß der Druckgasstrom zur Spülung der Zerstäubereinrichtung (10) nach Beendigung des Mediumstroms ausreicht und sich fremdenergiefrei einstellt.

9. Einrichtung nach einem der Ansprüche 5 bis 8, dadurch gekennzeichnet, daß eine Druckgasleitung (61) mit einem im Druckniveau einstellbaren Konstantdruckregler (62) vorgesehen ist.

10. Einrichtung nach einem der Ansprüche 5 bis 9, dadurch gekennzeichnet, daß die Mischleitung (12) zur Generierung eines Aerosols (69) ausgelegt ist.

11. Einrichtung nach einem der Ansprüche 5 bis 10, dadurch gekennzeichnet,daß die Zerstäuberdüse (13) einen Düsenraum enthält, der durch eine Zwischendüse (35) in zwei Düsenräume (36, 37) unterteilt ist und daß der Teilraum (37) nach der Zwischendüse sich in Strömungsrichtung stufenweise erweitert.

12. Einrichtung nach Anspruch 11, dadurch gekennzeichnet, daß der Zwischendüse (35) ein Sieb (46) mit 1 - 100% des Bohrungsdurchmessers der Zwischendüse vorgeschaltet ist.

13. Einrichtung nach einem der Ansprüche 5 bis 12, dadurch gekennzeichnet, daß die Düsenaustrittslöcher (40) der Zerstäuberdüse (13) zur Bildung eines Zerstäubernebelkonus (18) im Winkel (α) zueinander angeordnet sind.

14. Einrichtung nach einem der Ansprüche 5 bis 13, gekennzeichnet durch deren Anwendung zur Einbringung eines Reaktionsmittels in einen Gasstrom.

15. Einrichtung nach Anspruch 14, dadurch gekennzeichnet, daß die mit dem Reaktionsmittel in Berührung kommenden Oberflächenbereiche der Zerstäubereinrichtung mit einer katalytischen Schicht überzogen sind.

16. Einrichtung nach Anspruch 15, dadurch gekennzeichnet, daß bei Anwendung von Harnstofflösung als Reaktionsmittel die Oberflächenbereiche der Zerstäubereinrichtung mit einer katalytischen Schicht (44) überzogen sind, die aus einer Mischung aus sulfatisiertem TiO₂, SiO₂ und Al₂O₂ besteht.

17. Einrichtung nach Anspruch 15 oder 16, dadurch gekennzeichnet, daß die katalytische Schicht (44) beheizbar (45) ist.

18. Einrichtung nach einem der Ansprüche 5 bis 17, dadurch gekennzeichnet, daß der Zerstäubereinrichtung (10) eine intermittierend arbeitende Dosierpumpe (15) zugeordnet ist, die vorzugsweise eine federbelastete Membran-Dosierpumpe ist, deren Saughub von einem Magneten (53) aktvierbar ist.
